# EUROPÄISCHE PATENTSCHRIFT

(11) **EP 3 290 173 B1**
(45) Veröffentlichungstag und Bekanntmachung des Hinweises auf die Patenterteilung: **11.12.2019**
(21) Anmeldenummer: 16186923.5
(22) Anmeldetag: 02.09.2016
(51) Int. Cl.: B27N 7/00, B29C 59/04, B27N 3/14, B27N 3/00

(54) **VERFAHREN ZUR STRUKTURIERUNG DER OBERFLÄCHE EINER HOLZWERKSTOFFPLATTE UND EINER MITTELS DES VERFAHRENS HERGESTELLTE OBERFLÄCHENSTRUKTURIERTE HOLZWERKSTOFFPLATTE**
METHOD FOR STRUCTURING THE SURFACE OF A WOODEN PANEL AND A SURFACE-STRUCTURED WOODEN PANEL PREPARED BY MEANS OF THIS PROCESS
PROCEDE DE STRUCTURATION DE LA SURFACE D'UNE PLAQUE EN BOIS ET D'UNE PLAQUE EN BOIS A SURFACE STRUCTUREE FABRIQUEE SELON LE PROCEDE

(43) Veröffentlichungstag der Anmeldung: 07.03.2018
(73) Patentinhaber: SWISS KRONO Tec AG, 6004 Luzern (CH)
(72) Erfinder: KALWA, Norbert, 32805 Horn-Bad Meinberg (DE)
(74) Vertreter: Maikowski & Ninnemann Patentanwälte Partnerschaft mbB

(56) Entgegenhaltungen:
- EP-A1- 1 136 636
- EP-A1- 1 690 603
- EP-A2- 1 454 763
- EP-A2- 2 030 786
- EP-A2- 2 036 741
- DE-A1-102004 038 614
- DE-A1-102005 053 951
- DE-A1-102007 016 794
- DE-A1-102009 026 801
- DE-B3-102006 037 205
- DE-B4- 10 362 218
- JP-A- H08 318 506
- US-A- 4 557 779

## Beschreibung

Die vorliegende Erfindung betrifft ein Verfahren zur Strukturierung einer Oberfläche einer Holzwerkstoffplatte gemäß Anspruch 1 und eine oberflächenstrukturierte Holzwerkstoffplatte gemäß Anspruch 11.

### Beschreibung

Eine Holzwerkstoffplatte, die für eine Vielzahl von konstruktiven Anwendungen eingesetzt wird, ist eine sogenannte Grobspanplatte, auch OSB (oriented strand board) genannt. Die ursprünglich als Abfallprodukte der Furnier-und Sperrholzindustrie anfallenden OSB werden zunehmend im Holz- und Fertighausbau eingesetzt, da OSB leicht sind und trotzdem, die an Bauplatten gesetzten statischen Anforderungen erfüllen. So werden OSB als Bauplatten, zur Wand-oder Dachbeplankung oder auch im Fußbodenbereich eingesetzt.

Die Herstellung der OSB erfolgt in einem mehrstufigen Prozess, wobei zunächst lange, flächige Späne (strands) aus entrindetem Rundholz, insbesondere Nadelholz, in Längsrichtung durch rotierende Messer abgeschält werden. Die Strands haben typischerweise eine Länge zwischen 50-200 mm, eine Breite zwischen 5-20 mm und eine Dicke zwischen 0,1 und 1 mm.

Die Strands werden im Anschluss an die Trocknung in eine Beleimvorrichtung eingeführt, in welcher Leim bzw. Klebstoff fein verteilt auf die Späne aufgebracht werden. Zur Verleimung werden überwiegend PMDI (Polymeres Diphenylmethandiisocyanat) oder MUPF-Leime (Melamin-Harnstoff-Phenol-Formaldehyd) eingesetzt.

Nach der Beleimung werden die beleimten Strands in Streuapparaturen alternierend längs und quer zur Produktionsrichtung gestreut, sodass die Strands kreuzweise in mindestens 3 Schichten angeordnet sind (untere Deckschicht-Mittelschicht-obere Deckschicht). Die Streurichtung der Strands ist von einer Schicht zur nächsten Schicht um 90° gedreht. Hieraus resultiert auch die hohe Biegefestigkeit von OSB-Werkstoffplatten, die für viele Anwendungen wichtig ist.

Die Geometrie und Streuung der Strands führt jedoch bei den OSB-Platten meist nicht zu einer geschlossenen Oberfläche, sondern zu einer Struktur mit Vertiefungen, die bis zu mehrere Millimeter tief sein können. Diese Vertiefungen bzw. Löcher beschleunigen ein Eindringen von Wasser in tiefere Bereiche der OSB-Platte bei Regen oder bei anderen Beanspruchungen, bei denen Wasser anwesend ist. Dies kann zu unerwünschten Quellungen mit einer Verschlechterung der Festigkeitswerte führen und zum Beispiel nach einem Regenereignis eine Gewichtszunahme aufgrund der zusätzlichen Wasseraufnahme verursachen. Auch können die OSB-Platten schnell verschmutzen bzw. Chemikalien in die Oberfläche der Platte eindringen, was eine Leimhydrolyse oder Farbveränderungen verursachen kann.

Ein weiteres Problem ist, dass die Oberfläche der OSB-Werkstoffplatten aufgrund von im Herstellungsprozess verwendeten Trennmitteln und aus dem Holzwerkstoff und dem Bindemittel austretenden Inhaltsstoffen relativ glatt ist. Dies kann bei Anwendungen der OSB-Platten als Dachplatte bei Satteldächern mit einer erhöhten Dachneigung bei der Installation kritisch sein. Aber auch bei einer Anwendung als Fußbodenelement kann die glatte Oberfläche ein erhebliches Verletzungspotenzial zum Beispiel infolge von Stürzen darstellen.

Entsprechend wurden in der Vergangenheit verschiedene Ansätze getestet, um die beschriebenen Mängel der glatten und nicht-geschlossenen Oberfläche zu beheben, was meist jedoch mit deutlich höheren Kosten verbunden ist.

So besteht eine Möglichkeit im Befüllen der Vertiefungen bzw. Löcher auf der Oberfläche der OSB-Werkstoffplatte mit einem Lack. Dies erfordert allerdings eine Lackierlinie mit mehreren Auftragswerken. Da auch die Auftragsmengen bei einigen 100 g/m² liegen können, ist dieses Verfahren recht teuer. Auch eine Zugabe von Füllstoffen (wie zum Beispiel Holzmehl) zum Lack löst das Problem nicht. Zusätzlich kann es auch zur Aushärtungsstörungen beim Lack kommen, wenn die Fehlstellen in der Oberfläche der OSB zu tief sind. Auch kann mit einem Lack nicht ohne weiteres eine Antirutsch-Struktur in der gewünschten Tiefe erzeugt werden.

Ein weiterer Ansatz ist das Aufpressen von mit Phenolharz imprägnierten Natronkraftpapieren in einer Kurztaktpresse, wobei ein strukturiertes Pressblech verwendet wird. Mithilfe des strukturierten Bleches soll eine Antirutsch-Struktur in das Papier eingepresst werden. Allerdings müssen für dieses Verfahren relativ dicke beharzte Papiere mit einem Endgewicht von größer 400 g/m² eingesetzt werden, die relativ teuer sind. Auch können hiermit lediglich Strukturtiefen von kleiner 500 µm erreicht werden. Aus Gründen der Spannungssymmetrie müsste auf der Unterseite der Platte eine ähnlich dicke Beschichtung aufgebracht werden, was die Kosten weiter erhöht.

Ein anderer Ansatz in der Bereitstellung von Antirutsch-Oberflächen auf OSB-Holzwerkstoffplatten ist in der DE 10 2004 048 427 B3 beschrieben. Hier wird ein silikathalltiges Material vor dem Verpressen auf die gestreuten Strands aufgebracht und zusammen mit den beleimten Strands in einer Pressvorrichtung verpresst. Das silikathaltige Material wird durch das vorhandene Bindemittel unter Ausbildung einer rutschfesten Oberfläche an die Deckschicht der Platte gebunden. Nachteilig ist dabei, dass eine Oberfläche mit einer Porosität erzeugt wird, die stark schmutzanfällig ist.

In der DE 101 39864 C1 ist eine OSB-Holzwerkstoffplatte mit einer rutschfesten Oberfläche versehen, die aus partiell verteilten fadenförmigen Aufträgen eines Kunstharzes oder Kunststoffklebers besteht. Die Verteilung dieser fadenförmigen Aufträge auf der Oberfläche ist dabei zufällig, um die Herstellkosten zu minimieren.

DE 10 2005 053 951 offenbart ein Verfahren zur Herstellung einer OSB-Holzwerkstoffplatte mit rutschfester Oberfläche.

Diese bekannten oder möglichen Alternativen zur Bereitstellung von Antirutsch-Oberflächen auf OSB weisen mehr oder weniger große Nachteile auf, wie hohes Investitionsrisiko, hohe Materialverluste, Produktnachteile und Nachteile in der Verfahrenstechnologie.

Der vorliegenden Erfindung liegt daher die technische Aufgabe zugrunde ein Verfahren bereitzustellen, dass bei geringen Zusatzkosten eine OSB-Oberfläche erzeugt, die sowohl geschlossen ist als auch eine verbesserte Rutschfestigkeit aufweist. Die technischen Voraussetzungen, die zur Herstellung derartiger OSB-Holzwerkstoffplatten notwendig sind, sollten dabei so gering und kostengünstig wie möglich gehalten werden.

Diese Aufgabe wird erfindungsgemäß durch ein Verfahren zur Strukturierung einer Holzwerkstoffplatte mit den Merkmalen des Anspruchs 1 und eine mit diesem Verfahren hergestellte strukturierte Holzwerkstoffplatte gemäß Anspruch 11 gelöst.

In dem vorliegenden Verfahren werden demnach mindestens zwei Harzschichten aufgetragen, wobei die erste Kunststoffharzschicht der Verfüllung der Oberfläche (Auffüllen der Vertiefungen) der OSB dient und die zweite Kunstharzschicht die für den Antirutsch- Effekt erforderliche Struktur liefert. Der Auftrag der ersten Kunstharzschicht (zum Beispiel in Form eines sogenannten Hotmelts) kann mit einer glatten Walze im Gleichlauf erfolgen. Hierdurch kann sich vor der Walze auf der Oberfläche der OSB eine Wulst bilden, die entsprechend in der Lage ist, die Vertiefungen auf der Oberfläche der Platte aufzufüllen. In einem zweiten Schritt wird die zweite Kunststoffharzschicht mit einem strukturierten Auftragswerkzeug (zum Beispiel in Form einer mit einer Struktur versehenen Walze) auf die erste glatte Kunstharzschicht aufgetragen. Die hierbei sich ausbildende Oberflächenstruktur weist eine regelmäßige Anordnung von Erhebungen auf. Die Auswahl der Struktur kann dabei an den jeweiligen Anwendungsbereich angepasst werden. So können bei der Verwendung der strukturierten OSB als Fußbodenpaneele Strukturen mit einer geringen Höhe ausreichend sein, wohingegen bei einer Verwendung der strukturierten OSB als Unterdachplatte Strukturen mit einer größeren Höhe notwendig sind.

Das vorliegende Strukturierungsverfahren erfordert lediglich ein Walzenauftragsaggregat zur Verarbeitung des als Beschichtung verwendeten Kunststoffharzes (Hotmelt). So wird nach dem ersten Durchlauf mit einer Glattwalze zum Auftragen der ersten Kunststoffharzschicht in einem zweiten Durchlauf auf dem gleichen Aggregat eine strukturierte Walze zum Auftragen der zweiten Kunststoffharzschicht verbunden mit der gleichzeitigen Strukturierung dieser Harzschicht eingesetzt. Es ist generell auch möglich zwei Walzenaggregate zu verwenden, wodurch ein Durchlauf eingespart werden kann. Der Auftrag und die Strukturierung können auf großformatigen Holzwerkstoffplatten oder auch mit bereits vorkonfektionierten Elementen (Nut-und Federplatte) erfolgen.

Das vorliegende Verfahren zur Bereitstellung einer strukturierten Oberflächenbeschichtung einer Holzwerkstoffplatte, insbesondere einer OSB, ist mit geringen Zusatzkosten, niedrigen Investitionskosten, einer einfachen Nachrüstung mit wenig Platzbedarf und einer hohen Verfahrensflexibilität im Vergleich zu den bekannten Verfahren verbunden.

Im erfindungsgemäßen Strukturierungsverfahrens sind das mindestens eine erste Kunststoffharz zum Befüllen der Oberfläche der OSB und das mindestens eine zweite Kunststoffharz zur Strukturierung der Oberfläche gleich oder verschieden voneinander.

Es ist bevorzugt, wenn das erste und/oder das zweite Kunststoffharz ausgewählt sind aus einer Gruppe enthaltend Polyurethan, Polyamid, Ethylenvinylacetat (EVA) oder Polyolefinen. Bei den vorliegend verwendeten Kunststoffharzen handelt es sich um sogenannte Hotmelts. Die Materialauswahl erfolgt dabei in Hinblick auf den vorgesehenen Einsatzbereich und den sich daraus ergebenden Beanspruchungen bezüglich Temperatur, Chemikalien, Wasser usw. Im Falle der Verwendung von EVA, Polyamid oder Polyolefin erfolgt die Verfestigung der Harzschichten bevorzugt mittels Abkühlung.

In einer weiteren bevorzugten Ausführungsform des vorliegenden Strukturierungsverfahrens ist vorgesehen, dass die mindestens eine zweite zur Strukturierung verwendete Harzschicht Additive aufweist. Insbesondere kann die zweite Harzschicht verschleißhemmende Partikel, wie Aluminiumoxid (Korund), Siliziumdioxid (Glaspartikel) oder Siliziumkarbid enthalten. Die Zugabe dieser verschleißhemmenden Partikel führt zum einen zur Verbesserung der Verschleißfestigkeit der in der zweiten Kunstharzschicht ausgebildeten Erhebungen. Zusätzlich wird aufgrund der geringen Kosten der verschleißhemmenden Partikel auch die Menge der aufzutragenden zweiten Kunstharzstoffschicht verringert. Die Menge an verschleißhemmenden Partikeln kann zwischen 5 und 30 Gew%, bevorzugt zwischen 10 und 20 Gew% bezogen auf die verwendete zweite Kunststoffharzmenge betragen. Die verschleißhemmenden Partikel können auch über eine Streuapparatur auf die noch nicht verfestigte Harz- bzw. Hotmeltoberfläche aufgestreut werden. In diesem Fall liegt die Auftragsmenge bei 5 bis 30 g/m².

Als weiteres Additiv können der zweiten zur Strukturierung verwendeten Kunststoffharzschicht Farbstoffe zugefügt werden. Es besteht aber auch die Möglichkeit die erste Harz- bzw. Hotmeltschicht farbig zu gestalten und die zweite Schicht transparent auszuführen. Auch eine Einfärbung beider Harzschichten bzw. Hotmelts zur Erzeugung von Farbkombinationen ist möglich. Bei einer geeigneten Farbkombination können die strukturierten OSB-Holzwerkstoffplatten als dekorative Wandverkleidung eingesetzt werden.

In einer bevorzugten Ausführungsform können die erste und zweite Kunststoffharzschicht jeweils aus einem Polyurethan-Hotmelt bestehen. In einer anderen Variante besteht die erste Kunststoffharzschicht aus einem Polyurethan-Hotmelt und die zweite zur Strukturierung verwendete Harzschicht besteht aus einem Polyolefin-oder EVA-Hotmelt gefüllt mit Korund, insbesondere gefüllt mit 20 Gew% Korund.

In einer bevorzugten Ausführungsform des vorliegenden Strukturierungsverfahrens wird die erste Kunststoffharzschicht mit einem Auftragswerkzeug mit einer glatten Oberfläche, insbesondere mit einer Walze mit einer glatten Oberfläche, aufgetragen.

Dabei wird die erste Kunststoffharzschicht in einer Menge zwischen 50 und 150 g/m², bevorzugt zwischen 70 und 120 g/ m², insbesondere bevorzugt zwischen 80 und 100 g/m² aufgetragen. Wie bereits oben erwähnt dient diese erste Kunststoffharzschicht der Verfüllung der Oberfläche und entsprechend hängt die Menge der aufzutragenden ersten Kunststoffharzschicht von der Anzahl und Tiefe der auf der OSB-Oberfläche auftretenden Vertiefungen ab. Je unebener und offener die Oberfläche, desto mehr Kunststoffharz muss entsprechend aufgetragen werden.

In einer weiteren Variante des vorliegenden Strukturierungsverfahrens wird die zweite Kunststoffharzschicht in einer Menge zwischen 20 und 200 g/m², bevorzugt zwischen 30 und 150 g/m², insbesondere bevorzugt zwischen 40 und 100 g/m² aufgetragen. Die aufzutragende Menge an zweiter Kunststoffharzschicht wird dabei durch die Höhe der in der strukturierten Oberfläche auszubildenden Erhebungen bestimmt. Die Höhe derErhebungen wiederum ist abhängig vom Anwendungsbereich der strukturierten Holzwerkstoffplatte. Wie bereits oben erwähnt, sind bei der Verwendung von OSB als Fußbodenelemente geringe Steghöhen (und somit eine geringe Menge an zweiter Kunststoffharzschicht) ausreichend, wohingegen bei einer Verwendung einer strukturierten OSB als Unterdachplatte mit höheren Steghöhen (und entsprechend mit höheren Mengen an zweiter Kunststoffharzschicht) gearbeitet wird.

Es ist weiterhin vorgesehen, dass die mindestens eine erste Kunststoffharzschicht bei Temperaturen zwischen 100 und 200 °C, bevorzugt zwischen 130 und 180 °C, insbesondere bevorzugt zwischen 150 und 170 °C aufgetragen wird.

Nach dem Aufbringen der ersten Kunststoffharzschicht erfolgt eine Abkühlung der selbigen (zum Beispiel eine kurze Abkühlphase bei Raumtemperatur), um eine Verfestigung der ersten Kunststoffharzschicht zu bewirken, so dass die zweite Kunststoffharzschicht mit der gewünschten Strukturierung im Anschluss aufgetragen werden kann.

Der Auftrag der zweiten Kunststoffharzschicht verbunden mit deren Strukturierung erfolgt ebenfalls bei Temperaturen zwischen 100 und 200 °C, bevorzugt zwischen 130 und 180 °C, insbesondere bevorzugt zwischen 150 und 170 °C.

In einer besonders bevorzugten Ausführungsform des vorliegenden Strukturierungsverfahrens wird als Auftragswerkzeug für die zweite Kunststoffharzschicht mindestens eine Walze mit einer regelmäßig strukturierten Oberfläche verwendet.

Die regelmäßige Strukturierung der Oberfläche des Auftragswerkzeuges (z.B. eine Walze) für die zweite Kunststoffharzschicht wird durch entsprechende Vertiefungen bewirkt. Die Vertiefungen sind insbesondere als linienförmig verlaufende oder punktförmige Einkerbungen auf der Oberfläche des Auftragswerkzeuges ausgebildet, die z.B. eine Rauten-, Noppen-, Quadrat- oder Linienstruktur vorgeben. Die Dimensionen und Abmaße der Vertiefungen bzw. Einkerbungen als Strukturelemente kann dabei in Abhängigkeit von dem gewünschten Antirutsch-Effekt ausgewählt und eingestellt werden. Insbesondere korrespondiert die Tiefe der Einkerbung auf der Oberfläche der Strukturwalze zur angestrebten Höhe der Erhebung bzw. Steg in der zweiten Kunststoffharzschicht. Die Strukturierung der Oberfläche des Auftragswerkzeuges sollte dabei nicht zu fein sein, da wegen der hohen Viskosität des Schmelzklebers sehr feine Strukturen nicht abbildbar sind. Die Strukturtiefen können bei mehr als 500 µm liegen z.B. zwischen 500 und 1000 µm, bevorzugt zwischen 700 und 900 µm. Auch ist es bevorzugt, wenn das Auftragswerkzeug z.B. eine Strukturwalze eine Oberflächenbeschichtung aufweist, die ein Anhaften des Harzes

Nach dem Auftragen der zweiten Kunststoffharzschicht bei gleichzeitiger Strukturierung erfolgt die Verfestigung (oder auch Aushärten der aufgetragenen Kunststoffharzschichten (d.h. der aufgetragenen mindestens einen ersten und mindestens einen zweiten Kunststoffharzschicht), welches durch Abkühlen, insbesondere durch Besprühen der Kunststoffharzschichten mit Wasser, unterstützt wird.

Das vorliegende Strukturierungsverfahren ermöglicht somit die Bereitstellung einer Holzwerkstoffplatte, insbesondere einer OSB, mit einer regelmäßig strukturierten Oberflächenbeschichtung aus mindestens zwei Kunststoffharzschichten.

Die strukturierte Oberflächenbeschichtung der vorliegenden Holzwerkstoffplatte umfasst dabei regelmäßig angeordnete Erhebungen (z.B.. Stege), wobei die Erhebungen parallel oder senkrecht in einem regelmäßigen Abstand zueinander vorgesehen sein können. Die Oberflächenbeschichtung kann zum Beispiel eine Rauten-, Quadrat- oder Linienstruktur aufweisen. Die regelmäßigen Erhebungen können auch punktförmig z.B. in Form von Noppen aufgetragen sein.

Die ausgewählte Struktur wird dabei durch den Einsatzbereich und Verwendungszweck der OSB bestimmt. So weist eine für die Dachbeplankung zum Einsatz kommende OSB bevorzugt eine aus Streifen bestehende Struktur auf, um z.B. ein Ablaufen des Wassers von Dach zu ermöglichen. Eine Antirutsch-Oberfläche für horizontale Anwendungen der vorliegenden OSB wird hingegen bevorzugt aus Rauten oder Noppen gebildet. Auch ist bei einer rein horizontalen Anwendung zu beachten, dass die Oberfläche nicht zu stumpf wird.

In einer besonders bevorzugten Ausführungsform der vorliegenden Holzwerkstoffplatte weisen die Erhebungen eine Höhe zwischen 0,5 und 5 mm, bevorzugt zwischen 0,5 und 3 mm, insbesondere bevorzugt zwischen 0,5 und 1,5 mm auf. Wie bereits oben mehrfach ausgeführt, orientiert sich die Auswahl der Strukturhöhe am Anwendungsbereich der Holzwerkstoffplatte. Je höher der Antirutsch-Effekt ausgeprägt sein soll, dass so höher werden die Strukturhöhen sein. Bei einem geringeren Antirutsch-Effekt werden die Strukturhöhen entsprechend geringer ausfallen.

Der Antirutsch-Effekt wird nicht nur durch die Erhebungshöhe der Struktur beeinflusst, sondern auch durch das Verhältnis zwischen Erhebung und Fläche. Dieses Verhältnis liegt im Falle der vorliegenden Holzwerkstoffplatte zwischen 1:3 und 1:30, bevorzugt zwischen 1:5 und 1:20, insbesondere bevorzugt zwischen 1:10 und 1:15.

So wird zum Erreichen eines hohen Antirutsch-Effektes die Anzahl der Erhebungen im Verhältnis zu der freien Oberfläche (d.h. der Oberfläche der Platte, die nicht mit einer Erhebung versehen ist) besonders hoch ausgewählt werden, während zum Erreichen eines relativ geringen Antirutsch-Effektes die Anzahl der Erhebungen im Verhältnis zur freien Oberfläche relativ klein ausfallen wird.

Die Rutschhemmung der vorliegend strukturierten Holzwerkstoffplatte liegt vorteilhafterweise in den Bewertungsgruppen R 9 - R 11.

Bei einer Prüfung der Rutschhemmung der vorliegenden strukturierten Holzwerkstoffplatte zeigt sich, dass bereits bei einem einfachen Versuchsaufbau zum Beispiel Gewicht auf schiefer Ebene, ein deutlicher Unterschied in der Rutschhemmung erkennbar ist. So beginnt das Gewicht, das auf der strukturierten Fläche aufliegt, erst bei einer Gradzahl zu rutschen, die um mindestens 10° und mehr höher liegt als eine vergleichbare glatte, wenig strukturierte Oberfläche einer OSB.

Die mit dem vorliegenden Strukturierungsverfahren auftragbare Oberflächenstruktur ist nicht nur für OSB geeignet, sondern kann auch auf andere Holzwerkstoffplatten wie Spanplatten, MDF, HDF, Sperrholzplatten oder Platten aus Kunststoff oder einem Holzwerkstoff-Kunststoffgemisch angewendet werden.

Die Erfindung wird nachfolgend unter Bezugnahme auf die Figur der Zeichnung an einem Ausführungsbeispiel näher erläutert. Es zeigen:
- Figur 1: eine schematische Darstellung einer strukturierten Oberflächenschicht gemäß einer ersten Ausführungsform des erfindungsgemäßen Verfahrens, und
- Figur 2: eine schematische Darstellung einer strukturierten Oberflächenschicht gemäß einer zweiten Ausführungsform des erfindungsgemäßen Verfahrens.

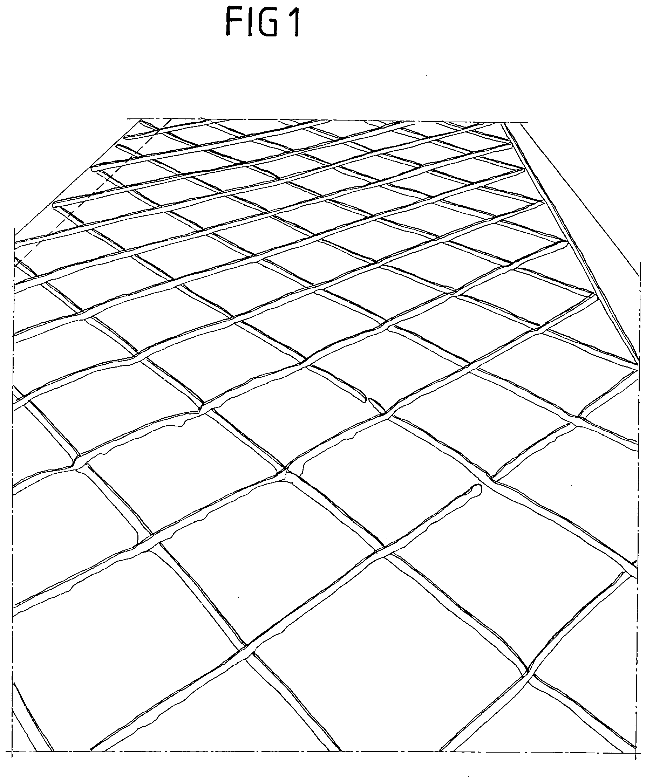

Figur 1 zeigt eine schematische Draufsicht auf eine erste Ausführungsform einer strukturierten Oberflächenschicht auf einer OSB hergestellt in dem erfindungsgemäßen Strukturierungsverfahren.

Auf die Oberfläche einer OSB wurde zunächst eine erste Polyurethan- Hotmeltschicht zum Auffüllen der Unebenheiten und Vertiefungen der Oberfläche aufgetragen.

Auf dieser ersten Hotmeltschicht aus Polyurethan ist eine Rautenstruktur aus einer zweiten Polyurethan-Hotmeltschicht angeordnet. Die in einem regelmäßigen Abstand vorgesehenen Erhebungen strukturieren die Oberfläche der OSB der Art, sodass es zu einer Aufrauhung der Oberfläche kommt und somit der gewünschte Antirutsch-Effekt bewirkt wird.

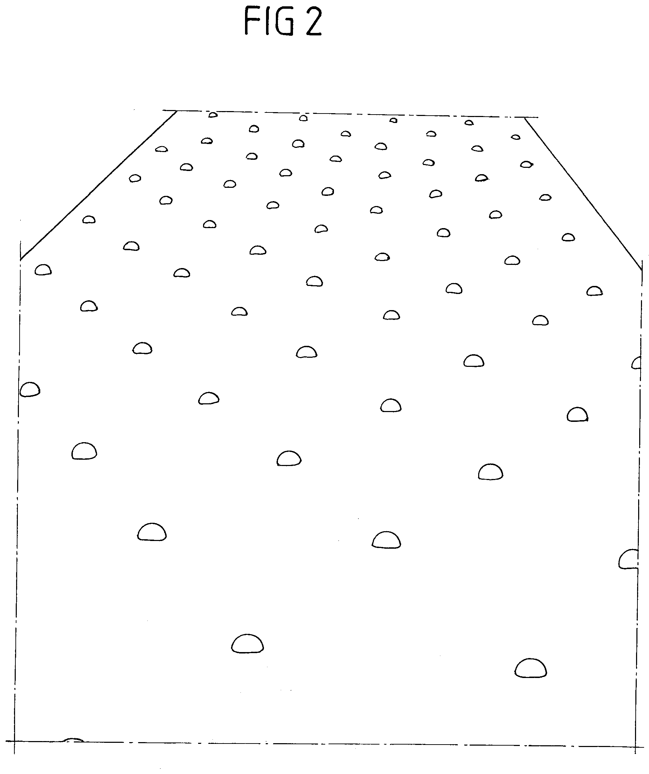

Figur 2 zeigt eine schematische Draufsicht auf eine zweite Ausführungsform einer strukturierten Oberflächenschicht auf einer OSB, wobei die Strukturierung hier in Form von regelmäßig zueinander angeordneten punktförmigen Erhebungen (Noppen) ausgebildet ist. Die Höhe der Noppen wird in Abhängigkeit vom anvisierten Einsatzgebiet der OSB gewählt.

### Ausführungsbeispiel 1:

Auf eine 22 mm OSB wird mit einem Walzenauftragsgerät PU-Hotmelt (Jowat 21 602.30) aufgetragen. Der Auftrag erfolgte im Gleichlauf und lag bei 90 g/m². Die Temperatur betrug 165°C. Nach einer kurzen Abkühlphase wurde auf die Oberfläche mit einer strukturierten Walze eine Rautenstruktur aufgetragen (Steghöhe: 2 mm, Verhältnis Fläche zu Steg: 20 : 1). Als Hotmelt wurde wiederum 21 602.30 eingesetzt. Die Auftragsmenge lag bei 60 g/m². Nach dem Hotmeltauftrag wurde auf die Oberfläche mit Hilfe einer Sprühvorrichtung 3 g Wasser/m² aufgesprüht. Damit sollte nicht nur die Vernetzung des Hotmelts beschleunigt werden sondern auch die Oberfläche schneller abgekühlt werden, um eine Stapelfähigkeit zu erreichen.

### Ausführungsbeispiel 2:

Auf eine 22 mm OSB wird mit einem Walzenauftragsgerät PU-Hotmelt (21 602.30) aufgetragen. Der Auftrag erfolgte im Gleichlauf und lag bei 90 g/m². Die Temperatur betrug 165°C. Nach einer kurzen Abkühlphase wurde auf die Oberfläche mit einer strukturierten Walze eine Linienstruktur aufgetragen (Steghöhe: 1,5 mm, Verhältnis Fläche zu Steg: 20 : 1). Als Hotmelt wurde Polyolefin eingesetzt. Dieser war mit ca. 20% Mineralstoffen gefüllt (Korund F 240). Die Auftragsmenge lag bei 80 g/m². Nach dem Hotmeltauftrag wurde auf die Oberfläche mit Hilfe einer Sprühvorrichtung 3 g Wasser/m² aufgesprüht. Damit sollte nicht nur die Vernetzung des zum Füllen der OSB eingesetzten Hotmelts beschleunigt werden sondern auch die Oberfläche schneller abgekühlt werden, um eine Stapelfähigkeit zu erreichen.

### Ausführungsbeispiel 3:

Auf eine 22 mm OSB wird mit einem Walzenauftragsgerät PU-Hotmelt (Jowat 21 602.30) aufgetragen. Der Auftrag erfolgte im Gleichlauf und lag bei 90 g/m². Die Temperatur betrug 165°C. Nach einer kurzen Abkühlphase wurde auf die Oberfläche mit einer strukturierten Walze eine in alle Richtungen symmetrische Noppenstruktur aufgetragen (Strukturhöhe: 500 µm, Abstand Mitte Noppen zu Mitte Noppen: 6 mm). Als Hotmelt wurde wiederum 21 602.30 eingesetzt. Die Auftragsmenge lag bei 60 g/m². Nach dem Hotmeltauftrag wurde auf die Oberfläche mit Hilfe einer Sprühvorrichtung 3 g Wasser/m² aufgesprüht. Damit sollte nicht nur die Vernetzung des Hotmelts beschleunigt werden sondern auch die Oberfläche schneller abgekühlt werden, um eine Stapelfähigkeit zu erreichen.

An den Mustern wurde eine einfache Prüfung der Rutschhemmung durchgeführt. Zu diesem Zweck wurde ein quaderförmiges Metallgewicht (2 kg) auf eine Platte mit der entsprechenden Oberfläche aufgelegt (Abmessungen: 600 x 200 mm). Die Probe lag dabei an dem Rand mit der Länge von 200 mm. Die Musterplatte wurde dann langsam an diesem Rand angehoben, sodass eine schiefe Ebene entstand. Dies wurde solange weitergeführt bis das Metallstück zu rutschen begann. Dort wurde dann der Winkel der schiefen Ebene bestimmt. Im Vergleich zu den beiden Mustern aus den Ausführungsbeispielen, wurden eine ungeschliffene OSB und eine OSB mit lediglich dem ersten PU-Auftrag mitgeprüft.

An dem Muster aus dem Ausführungsbeispiel 3 wurde zusätzlich die Rutschhemmstufe nach DIN 51130 und ASR A 1.5/1.2 bestimmt.

| Muster | OSB ungeschliffen | OSB PU-Grundierung | Ausführungsbeispiel 1 | Ausführungsbeispiel 2 | Ausführungsbeispiel 3 |
|---|---|---|---|---|---|
| Winkel schiefe Ebene | 13° | 16° | 29° | 31° | 30° |
| Rutschhemmstufe DIN 51130 ASR A1.5/1.2 | | | | | R9 |

Wie aus der Tabelle zu entnehmen ist, führt die aufgebrachte Struktur zu einer deutlichen Verbesserung der Rutschhemmung. Die Oberfläche auf der OSB aus dem Ausführungsbeispiel 3 kann durch die Einstufung in die Rutschhemmstufe R9 in vielen öffentlichen Bereichen als Bodenbelag eingesetzt werden.

## Patentansprüche

1. Verfahren zur Strukturierung von mindestens einer Oberfläche einer OSB-Holzwerkstoffplatte mit Antirutsch-Oberfläche, wobei die Strukturierung aus regelmäßig angeordneten Strukturerhebungen auf der Oberfläche der OSB-Holzwerkstoffplatte besteht,
umfassend die Schritte
a) Bereitstellen von mindestens einer OSB-Holzwerkstoffplatte,
b) Aufbringen von mindestens einer ersten Schicht aus mindestens einem ersten Kunststoffharz auf die mindestens eine Oberfläche der Holzwerkstoffplatte mit mindestens einem ersten Auftragswerkzeug zur Verfüllung der Oberfläche der OSB-Holzwerkstoffplatte,
c) Aufbringen von mindestens einer zweiten Schicht aus mindestens einem zweiten Kunststoffharz zur Ausbildung der regelmäßig angeordneten Strukturerhebungen zur Ausbildung des Anti-Rutscheffektes auf die mindestens eine erste Kunststoffharzschicht mit mindestens einem Auftragswerkzeug mit einer regelmäßig strukturierten Oberfläche,
wobei das Verhältnis zwischen Strukturerhebungen und freier Oberfläche der OSB-Holzwerkstoffplatte zwischen 1:3 und 1:30 liegt, und
d) Verfestigen der ersten Schicht aus dem ersten Kunststoffharz und der zweiten Schicht mit den Strukturerhebungen aus dem zweiten Kunststoffharz.

2. Verfahren nach Anspruch 1, **dadurch gekennzeichnet, dass** das mindestens eine erste Kunststoffharz und das mindestens eine zweite Kunststoffharz gleich oder verschieden voneinander sind.

3. Verfahren nach Anspruch 1 oder 2, **dadurch gekennzeichnet, dass** das erste und/oder zweite Kunststoffharz ausgewählt ist aus einer Gruppe enthaltend Polyurethan, Polyamid, Ethylenvinylacetat, Polyolefin.

4. Verfahren nach einem der vorhergehenden Ansprüche, **dadurch gekennzeichnet, dass** die mindestens eine zweite, strukturierte Harzschicht Additive, insbesondere verschleißhemmende Partikel, wie Korund, Glaspartikel, oder Farbstoffe aufweist.

5. Verfahren nach einem der vorhergehenden Ansprüche, **dadurch gekennzeichnet, dass** die erste Kunststoffharzschicht mit einem Auftragswerkzeug mit einer glatten Oberfläche, insbesondere mit einer Walze mit einer glatten Oberfläche, aufgetragen wird.

6. Verfahren nach einem der vorhergehenden Ansprüche, **dadurch gekennzeichnet, dass** die erste Kunststoffharzschicht in einer Menge zwischen 50 und 150 g/m², bevorzugt zwischen 70 und 120 g/m², insbesondere bevorzugt zwischen 80 und 100 g/m² aufgetragen wird.

7. Verfahren nach einem der vorhergehenden Ansprüche, **dadurch gekennzeichnet**, das zweite Kunststoffharzschicht in einer Menge zwischen 20 und 200 g/m², bevorzugt zwischen 30 und 150 g/m², insbesondere bevorzugt zwischen 40 und 100 g/m² aufgetragen wird.

8. Verfahren nach einem der vorhergehenden Ansprüche, **dadurch gekennzeichnet, dass** die mindestens eine erste Kunststoffharzschicht und die zweite Kunststoffharzschicht jeweils bei Temperaturen zwischen 100 und 200°C, bevorzugt zwischen 130 und 180°C, insbesondere bevorzugt zwischen 150 und 170°C aufgetragen werden.

9. Verfahren nach einem der vorhergehenden Ansprüche, **dadurch gekennzeichnet, dass** als Auftragswerkzeug für die zweite Kunststoffharzschicht mindestens eine Walze mit einer regelmäßig strukturierten Oberfläche, insbesondere einer Rauten-, Quadrat-, Noppen- oder Linienstruktur verwendet wird.

10. Verfahren nach einem der vorhergehenden Ansprüche, **dadurch gekennzeichnet, dass** verschleißhemmende Partikel unter Verwendung einer Streuapparatur auf die noch nicht verfestigte Kunstharzschicht aufgestreut werden.

11. OSB-Holzwerkstoffplatte mit einer Antirutsch-Oberfläche herstellbar nach einem Verfahren gemäß einem der vorhergehenden Ansprüche
**gekennzeichnet durch**
eine regelmäßig strukturierte Oberflächenbeschichtung aus regelmäßig angeordneten Strukturerhebungen zur Ausbildung des Antirutsch-Effektes, wobei die Oberflächenbeschichtung aus einer ersten Kunststoffharzschicht zur Verfüllung der Oberfläche der OSB-Holzwerkstoffplatte und einer zweiten Kunststoffharzschicht besteht, und wobei die Strukturerhebungen zur Ausbildung des Antirutsch-Effektes aus dem zweitem Kunststoffharz bestehen, und
wobei das Verhältnis zwischen Strukturerhebungen und freier Oberfläche der OSB-Holzwerkstoffplatte zwischen 1:3 und 1:30 liegt.

12. Holzwerkstoffplatte nach Anspruch 11 , **dadurch gekennzeichnet, dass** die strukturierte Oberflächenbeschichtung eine Rauten-, Noppen-, Quadrat- oder Linienstruktur umfasst.

13. Holzwerkstoffplatte nach einem der Ansprüche 11 bis 12, **dadurch gekennzeichnet, dass** die Strukturerhebungen eine Höhe zwischen 0,5 und 5 mm, bevorzugt zwischen 0,5 und 3 mm, insbesondere bevorzugt zwischen 0.5 und 1,5 mm aufweisen.

14. Holzwerkstoffplatte nach einem der Ansprüche 11 bis 13, **dadurch gekennzeichnet, dass** das Verhältnis von Strukturerhebung und Fläche zwischen 1 : 5 und 1 : 20, insbesondere bevorzugt zwischen 1 : 10 und 1 : 15 liegt.

## Claims

1. A method for structuring at least one surface of an OSB wood-based panel having an anti-slip surface, wherein the structuring consists of regularly arranged structural elevations on the surface of the OSB wood-based panel,
comprising the steps
a) providing at least one OSB wood-based panel,
b) applying at least one first layer of at least one first plastic resin to the at least one surface of the wood-based panel with at least one first application tool for filling the surface of the OSB wood-based panel,
c) applying at least one second layer of at least one second plastic resin to form the regularly arranged structural elevations for forming the anti-slip effect to the at least one first plastic resin layer with at least one application tool having a regularly structured surface,
wherein the ratio between structural elevations and free surface of the OSB wood-based panel is between 1:3 and 1:30, and
d) solidifying the first layer of the first plastic resin and the second layer having the structural elevations of the second plastic resin.

2. Method according to claim 1, **characterized in that** said at least one first plastic resin and said at least one second plastic resin are the same or different from each other.

3. Method according to claim 1 or 2, **characterized in that** the first and/or second plastic resin is selected from a group comprising polyurethane, polyamide, ethylene vinyl acetate, polyolefin.

4. Method according to one of the preceding claims, **characterized in that** the at least one second, structured resin layer comprises additives, in particular wear-resistant particles, such as corundum, glass particles, or dyes.

5. Method according to one of the preceding claims, **characterized in that** the first plastic resin layer is applied with an application tool with a smooth surface, in particular with a roller with a smooth surface.

6. Method according to one of the preceding claims, **characterized in that** the first plastic resin layer is applied in an amount between 50 and 150 g/m², preferably between 70 and 120 g/m², in particular preferably between 80 and 100 g/m².

7. Method according to one of the preceding claims, **characterized in that** the second plastic resin layer is applied in an amount between 20 and 200 g/m², preferably between 30 and 150 g/m², in particular preferably between 40 and 100 g/m².

8. Method according to one of the preceding claims, **characterized in that** the at least one first plastic resin layer and the second plastic resin layer are each applied at temperatures between 100 and 200°C, preferably between 130 and 180°C, in particular preferably between 150 and 170°C.

9. Method according to one of the preceding claims, **characterized in that** at least one roller having a regularly structured surface, in particular a diamond, square, knob or line structure, is used as application tool for the second plastic resin layer.

10. Method according to one of the preceding claims, **characterized in that** wear-resistant particles are scattered onto the as yet unsolidified synthetic resin layer using a scattering apparatus.

11. OSB wood-based panel having an anti-slip surface producible by a process according to one of the preceding claims
**characterized by**
a regularly structured surface coating of regularly arranged structure elevations for forming the anti-slip effect, wherein the surface coating consists of a first plastic resin layer for filling the surface of the OSB wood-based panel and a second plastic resin layer, and wherein the structure elevations for forming the anti-slip effect consist of the second plastic resin,
wherein the ratio between structural elevations and free surface of the OSB wood-based panel is between 1:3 and 1:30.

12. Wood-based panel according to Claim 11, **characterized in that** the structured surface coating comprises a diamond, stud, square or line structure.

13. Wood-based panel according to one of claims 11 to 12, **characterized in that** the structural elevations have a height between 0.5 and 5 mm, preferably between 0.5 and 3 mm, in particular preferably between 0.5 and 1.5 mm.

14. Wood-based panel according to one of the claims 11 to 13, **characterized in that** the ratio of structural elevation and area is between 1 : 5 and 1 : 20, in particular preferably between 1 : 10 and 1 : 15.

## Revendications

1. Procédé de structuration d'au moins une surface d'une plaque en bois OSB avec surface anti-glissement, dans lequel la structuration se compose d'élévations de structure agencées de façon régulière sur la surface de la plaque en bois OSB,
comprenant les étapes de
a) fourniture d'au moins une plaque en bois OSB,
b) application d'au moins une première couche en au moins une première résine synthétique sur l'au moins une surface de la plaque en bois avec au moins un premier outil d'application pour le comblement de la surface de la plaque en bois OSB,
c) application d'au moins une seconde couche en au moins une seconde résine synthétique pour la réalisation des élévations de structure agencées de façon régulière pour la réalisation de l'effet anti-glissement sur l'au moins une première couche de résine synthétique avec au moins un outil d'application avec une surface structurée de façon régulière,
dans lequel le rapport entre les élévations de structure et la surface libre de la plaque en bois OSB se situe entre 1:3 et 1:30, et
d) solidification de la première couche en première résine synthétique et de la seconde couche avec les élévations de structure en seconde résine synthétique.

2. Procédé selon la revendication 1, **caractérisé en ce que** l'au moins une première résine synthétique et l'au moins une seconde résine synthétique sont identiques ou différentes l'une de l'autre.

3. Procédé selon la revendication 1 ou 2, **caractérisé en ce que** la première et/ou seconde résine synthétique est sélectionnée parmi un groupe contenant le polyuréthane, le polyamide, l'éthylène-acétate de vinyle, la polyoléfine.

4. Procédé selon l'une quelconque des revendications précédentes, **caractérisé en ce que** l'au moins une seconde couche de résine structurée présente des additifs, en particulier des particules anti-usure, telles que du corindon, des particules de verre, ou des colorants.

5. Procédé selon l'une quelconque des revendications précédentes, **caractérisé en ce que** la première couche de résine synthétique est appliquée avec un outil d'application avec une surface lisse, en particulier avec un rouleau avec une surface lisse.

6. Procédé selon l'une quelconque des revendications précédentes, **caractérisé en ce que** la première couche de résine synthétique est appliquée en une quantité entre 50 et 150 g/m², de préférence entre 70 et 120 g/m², de manière particulièrement préférée entre 80 et 100 g/m².

7. Procédé selon l'une quelconque des revendications précédentes, **caractérisé en ce que** la seconde couche de résine synthétique est appliquée en une quantité entre 20 et 200 g/m², de préférence entre 30 et 150 g/m², de manière particulièrement préférée entre 40 et 100 g/m².

8. Procédé selon l'une quelconque des revendications précédentes, **caractérisé en ce que** l'au moins une première couche de résine synthétique et la seconde couche de résine synthétique sont appliquées respectivement à des températures entre 100 et 200 °C, de préférence entre 130 et 180°C, de manière particulièrement préférée entre 150 et 170 °C.

9. Procédé selon l'une quelconque des revendications précédentes, **caractérisé en ce qu'**au moins un rouleau avec une surface structurée de façon régulière, en particulier une structure de losange, carré, nopes ou lignes, est utilisée en tant qu'outil d'application pour la seconde couche de résine synthétique.

10. Procédé selon l'une quelconque des revendications précédentes, **caractérisé en ce que** des particules anti-usure sont dispersées sur la couche de résine synthétique pas encore solidifiée en utilisant un équipement de dispersion.

11. Plaque en bois OSB avec une surface anti-glissement pouvant être fabriquée selon un procédé selon l'une quelconque des revendications précédentes
**caractérisée par**
un revêtement de surface structuré de façon régulière en élévations de structure agencées de façon régulière pour la réalisation de l'effet anti-glissement, dans laquelle le revêtement de surface se compose d'une première couche de résine synthétique pour le comblement de la surface de la plaque en bois OSB et d'une seconde couche de résine synthétique, et dans laquelle les élévations de structure pour la réalisation de l'effet anti-glissement se composent de la seconde résine synthétique, et
dans laquelle le rapport entre les élévations de structure et la surface libre de la plaque en bois OSB se situe entre 1:3 et 1:30.

12. Plaque en bois selon la revendication 11, **caractérisée en ce que** le revêtement de surface structuré comprend une structure de losange, nopes, carré ou lignes.

13. Plaque en bois selon l'une quelconque des revendications 11 à 12, **caractérisée en ce que** les élévations de structure présentent une hauteur entre 0,5 et 5 mm, de préférence entre 0,5 et 3 mm, de manière particulièrement préférée entre 0,5 et 1,5 mm.

14. Plaque en bois selon l'une quelconque des revendications 11 à 13, **caractérisée en ce que** le rapport élévation de structure et surface se situe entre 1:5 et 1:20, de manière particulièrement préférée entre 1:10 et 1:15.
